# EUROPEAN PATENT SPECIFICATION

(11) **EP 3 594 890 B1**
(45) Date of publication and mention of the grant of the patent: **25.12.2024**
(21) Application number: 19185370.4
(22) Date of filing: 10.07.2019
(51) Int. Cl.: G06Q 30/0601, G06Q 30/06, G06Q 50/12, G07G 1/00

(54) **ORDER SYSTEM, ORDER TERMINAL, AND INFORMATION PROCESSING PROGRAM**
BESTELLSYSTEM, BESTELLENDGERÄT UND INFORMATIONSVERARBEITUNGSPROGRAMM
SYSTÈME DE COMMANDE, TERMINAL DE COMMANDE ET PROGRAMME DE TRAITEMENT D'INFORMATIONS

(30) Priority: 13.07.2018 JP 2018133424
(43) Date of publication of application: 15.01.2020
(73) Proprietor: Toshiba Tec Kabushiki Kaisha, 141-8562 Tokyo (JP)
(72) Inventor: KOBAYASHI, Hideo, Shinagawa-ku, Tokyo 141-8562 (JP)
(74) Representative: Bandpay & Greuter

(56) References cited:
- EP-A1- 2 988 266
- JP-A- 2002 279 042
- US-A- 5 235 509
- US-A1- 2008 168 397
- US-A1- 2009 132 492
- US-A1- 2012 185 355
- US-A1- 2017 032 451

## Description

### FIELD

The present invention relates to the field of an information processing technology in general, and embodiments described herein relate in particular to an order system, an order terminal, and an information processing program according to the set of claims.

### BACKGROUND

In a restaurant or the like, a self-order system that allows a customer to operate a self-type order terminal set in a customer table to place an order has already been put to practical use.

If there are a large number of articles that can be ordered, it may be difficult to designate all the articles on one order screen. Therefore, in most cases, a plurality of order screens are prepared and an order screen to be displayed is switched according to operation by a customer. That is, if the customer is about to order an article, the customer causes the order terminal to display an order screen for ordering the article and then places an order.

If the customer does not find the order screen for ordering the article that the customer is about to order, the customer sometimes inquires a store clerk about the order screen.

In response to the inquiry, the store clerk has to guide the customer about operation of the order terminal. However, the order terminal is basically operated by the customer and is usually not operated by the store clerk. Therefore, since the store clerk is not familiar with the operation of the order terminal, it is also likely that the store clerk cannot appropriately guide the customer about the operation of the order terminal.

Under such circumstances, it has been desired that labor and time of a store clerk who answers an inquiry concerning operation for ordering an article that a customer is about to order can be reduced.

Document US 2012/0185355 Al discloses a social shopping system.

### SUMMARY OF INVENTION

To solve such problem, the invention is set out in the appended claims.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating a schematic configuration of a POS system according to an embodiment;
FIG. 2 is a block diagram illustrating a main part circuit configuration of a table terminal and a handy terminal illustrated in FIG. 1;
FIG. 3 is a flowchart illustrating a processing procedure of a processor provided in the handy terminal illustrated in FIG. 1 in information processing for operation guidance; and
FIG. 4 is a flowchart illustrating a processing procedure of a processor provided in the table terminal illustrated in FIG. 1 in the information processing for the operation guidance.

### DETAILED DESCRIPTION

An object of embodiments is to provide an order system, an order terminal, and an information processing program that can reduce labor and time of a store clerk who answers an inquiry concerning operation for ordering an article that a customer is about to order.

An order system according to an embodiment includes: a first terminal operated by a store clerk; and a second terminal operated by a customer. The first terminal includes a notifying section. The second terminal includes a determining section and a guiding section. The notifying section notifies an article designated by the store clerk to the second terminal. The determining section determines, based on the notification by the notifying section, the article designated by the store clerk. The guiding section performs a predetermined guiding operation for guiding the customer about operation for ordering, with the second terminal, the article determined by the determining section.

An example of an embodiment is explained below with reference to the drawings. In this embodiment, a POS (point-of-sale) system including an order system is explained as an example.

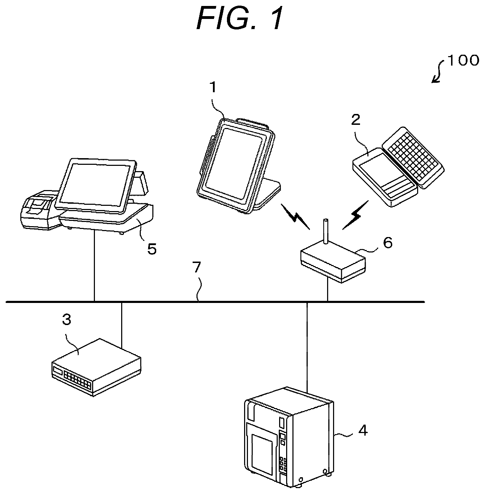

FIG. 1 is a diagram illustrating a schematic configuration of a POS system 100 according to this embodiment.

The POS system 100 is usable in various facilities such as a restaurant that performs a service for providing commodities such as foods and drinks according to orders of customers.

The POS system 100 includes a table terminal 1, a handy terminal 2, an order management apparatus 3, a slip printer 4, a POS terminal 5, a wireless router 6, and a communication network 7. One table terminal 1, one handy terminal 2, one slip printer 4, one POS terminal 5, and one wireless router 6 are illustrated in FIG. 1. However, the numbers of table terminals 1, handy terminals 2, slip printers 4, POS terminals 5, and wireless routers 6 may be respectively any numbers. In most cases, a plurality of table terminals 1 and a plurality of handy terminals 2 are included in the POS system 100.

The POS system 100 is configured by enabling the table terminal 1, the handy terminal 2, the order management apparatus 3, the slip printer 4, and the POS terminal 5 to communicate with one another via the communication network 7. The table terminal 1 and the handy terminal 2 are connected to the communication network 7 via the wireless router 6 by wireless communication with the wireless router 6. However, the table terminal 1 and the handy terminal 2 may be directly connected to the communication network 7. Alternatively, the order management apparatus 3, the slip printer 4, and the POS terminal 5 may be connected to the communication network 7 via the wireless router 6 by the wireless communication with the wireless router 6. The table terminal 1 is a form of an order terminal that receives operation for an order. The table terminal 1 is set in a customer table and operated by a customer. The table terminal 1 is called self-order terminal as well. The table terminal 1 is an example of a second terminal operated by the customer.

The handy terminal 2 is a form of an order terminal that receives operation for an order. The handy terminal 2 is carried and operated by a store clerk. The handy terminal 2 is an example of a first terminal operated by the store clerk.

The order management apparatus 3 manages orders received by the table terminal 1 and the handy terminal 2.

The slip printer 4 is set in, for example, a customer service floor or a kitchen. The slip printer 4 set in the customer service floor prints an order slip for the customer. That is, the slip printer 4 set in the customer service floor is a so-called customer printer. The slip printer 4 set in the kitchen prints a cooking slip for a cook. That is, the slip printer 4 set in the kitchen is a so-called kitchen printer.

The POS terminal 5 is set in, for example, the customer service floor or a checkout counter. The POS terminal 5 performs information processing concerning various jobs such as guidance to a customer, order reception, serving, tray service, and accounting. In the POS terminal 5 set in the customer service floor, the information processing concerning the guidance, the order reception, the serving, and the tray service is mainly executed. In the POS terminal 5 set in the checkout counter, the information processing concerning the accounting is further executed. The POS terminal 5 may be specialized for a specific use by performing processing concerning only a part of the jobs.

The wireless router 6 enables, while performing wireless communication with apparatuses including a wireless communication function such as the table terminal 1 and the handy terminal 2, the apparatuses to communicate via the communication network 7. The wireless router 6 enables communication between the table terminal 1 and the handy terminal 2 by connecting a wireless line to the table terminal 1 and a wireless line to the handy terminal 2 each other.

The communication network 7 transmits data exchanged by apparatuses including a communication function such as the table terminal 1, the handy terminal 2, the order management apparatus 3, the slip printer 4, and the POS terminal 5. As the communication network 7, a LAN (local area network) is typically used. However, as the communication network 7, the Internet, a VPN (virtual private network), a public communication network, a mobile communication network, and the like can be used alone or can be used in combination as appropriate besides the LAN.

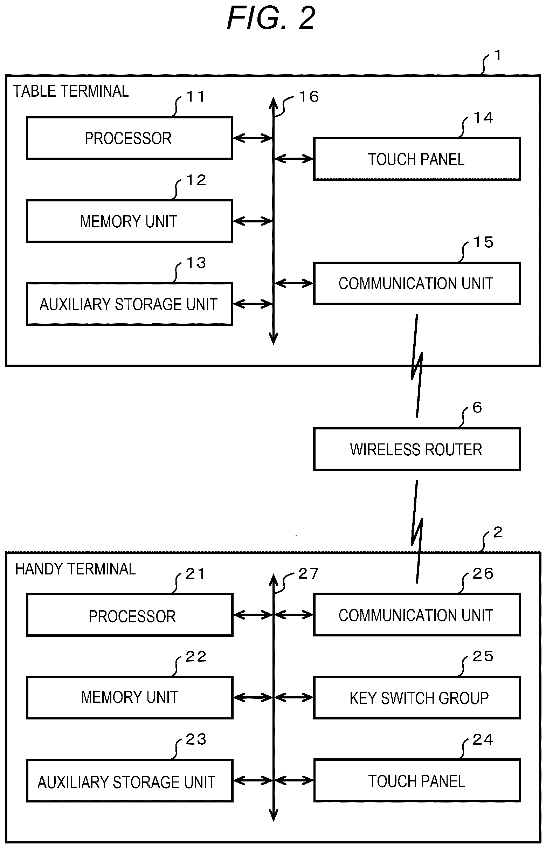

FIG. 2 is a block diagram illustrating a main part circuit configuration of the table terminal 1 and the handy terminal 2.

The table terminal 1 includes a processor 11, a memory unit 12, an auxiliary storage unit 13, a touch panel 14, a communication unit 15, and a transmission line 16.

The processor 11, the memory unit 12, and the auxiliary storage unit 13 are connected by the transmission line 16 to configure a computer that executes information processing for realizing functions of the table terminal 1.

The processor 11 is a central part of the computer. The processor 11 executes information processing based on information processing programs such as an operating system, middleware, and application programs stored in the memory unit 12 or the auxiliary storage unit 13.

The memory unit 12 is equivalent to a main storage portion of the computer. The memory unit 12 includes a nonvolatile memory region and a volatile memory region. The memory unit 12 stores the information processing program in the nonvolatile memory region. The memory unit 12 sometimes stores, in the nonvolatile or volatile memory region, data necessary for the processor 11 to execute processing for controlling the sections. The memory unit 12 uses the volatile memory region as a work area in which data is rewritten as appropriate by the processor 11.

The auxiliary storage unit 13 is equivalent to an auxiliary storage portion of the computer. The auxiliary storage unit 13 is, for example, an EEPROM (electric erasable programmable read-only memory), a HDD (hard disc drive), or an SSD (solid state drive). The auxiliary storage unit 13 saves data used by the processor 11 in performing various kinds of processing or data generated by the processing in the processor 11. The auxiliary storage unit 13 sometimes stores the information processing program.

The touch panel 14 functions as an input device and a display device.

The communication unit 15 performs wireless communication with the wireless router 6 and performs communication processing for the processor 11 to exchange various data with the handy terminal 2, the order management apparatus 3, and the like.

The transmission line 16 includes an address bus, a data bus, and a control signal line and transmits data and control signals exchanged among the sections connected by the transmission line 16.

As basic hardware of the table terminal 1, for example, a tablet computer apparatus can be used. In general, transfer of the table terminal 1 is performed in a state in which an information processing program describing information processing explained below is stored in the memory unit 12 or the auxiliary storage unit 13. However, a computer apparatus in a state in which the information processing program is not stored in the memory unit 12 or the auxiliary storage unit 13 or a state in which an information processing program of another version of the same type is stored in the memory unit 12 or the auxiliary storage unit 13 and the information processing program may be separately transferred. The table terminal 1 may be configured by writing the information processing program in the memory unit 12 or the auxiliary storage unit 13 included in the computer apparatus according to operation by any operator. In this case, the transfer of the information processing program can be performed by recording the information processing program in a removable recording medium such as a magnetic disk, a magneto-optical disk, an optical disk, or a semiconductor memory or can be performed by communication via a network.

The handy terminal 2 includes a processor 21, a memory unit 22, an auxiliary storage unit 23, a touch panel 24, a key switch group 25, a communication unit 26, and a transmission line 27.

The processor 21, the memory unit 22, and the auxiliary storage unit 23 are connected by the transmission line 27 to configure a computer that executes information processing for realizing functions of the handy terminal 2.

The processor 21 is a central part of the computer. The processor 21 executes information processing based on information processing programs such as an operating system, middleware, and application programs stored in the memory unit 22 or the auxiliary storage unit 23.

The memory unit 22 is equivalent to a main storage portion of the computer. The memory unit 22 includes a nonvolatile memory region and a volatile memory region. The memory unit 22 stores the information processing programs in the nonvolatile memory region. The memory unit 22 sometimes stores, in the nonvolatile or volatile memory region, data necessary for the processor 21 to execute processing for controlling the sections. The memory unit 22 uses the volatile memory region as a work area in which data is rewritten as appropriate by the processor 21.

The auxiliary storage unit 23 is equivalent to an auxiliary storage portion of the computer. The auxiliary storage unit 23 is, for example, an EEPROM, a HDD, or an SSD. The auxiliary storage unit 23 saves data used by the processor 21 in performing various kinds of processing or data generated by the processing in the processor 21. The auxiliary storage unit 23 sometimes stores the information processing programs.

The touch panel 24 functions as an input device and a display device.

The key switch group 25 includes a plurality of key switches to which order target articles or various functions are allocated.

The communication unit 26 performs wireless communication with the wireless router 6 and performs communication processing for the processor 21 to exchange various data with the table terminal 1, the order management apparatus 3, and the like.

The transmission line 27 includes an address bus, a data bus, and a control signal line and transmits data and control signals exchanged among the sections connected by the transmission line 27.

As basic hardware of the handy terminal 2, basic hardware of an existing handy terminal of the same type can be used. In general, transfer of the handy terminal 2 is performed in a state in which an information processing program describing information processing explained below is stored in the memory unit 22 or the auxiliary storage unit 23. However, hardware in a state in which the information processing program is not stored in the memory unit 22 or the auxiliary storage unit 23 or a state in which an information processing program of another version of the same type is stored in the memory unit 22 or the auxiliary storage unit 23 and the information processing program describing the information processing explained below may be separately transferred. The handy terminal 2 may be configured by writing the information processing program describing the information processing explained below in the memory unit 22 or the auxiliary storage unit 23 according to operation by any operator. The transfer of the information processing program can be performed by recording the information processing program in a removable recording medium such as a magnetic disk, a magneto-optical disk, an optical disk, or a semiconductor memory or can be performed by communication via a network.

The operation of the POS system 100 configured as explained above is explained. Contents of various kinds of processing explained below are examples. It is possible to, for example, change the order of a part of the processing, omit a part of the processing, or add other processing as appropriate.

Sales management performed using the POS system 100 is performed in the same manner as sales management performed by an existing self-order system. As an example, a flow of the sales management is as explained below. The processor 11 causes the table terminal 1 to display an order screen for the customer to order a commodity. The customer operates, according to the order screen, the table terminal 1 in order to order a desired commodity. The table terminal 1 transmits order data representing order content to the order management apparatus 3. Alternatively, the store clerk operates the handy terminal 2 in order to order a commodity ordered by the customer. The handy terminal 2 transmits order data representing order content to the order management apparatus 3. The order management apparatus 3 creates, based on the order data received from the table terminal 1 or the handy terminal 2, an order list representing the order content and manages the order list. If order data concerning an additional order is sent from the table terminal 1 or the handy terminal 2, the order management apparatus 3 updates the order list. Every time the order management apparatus 3 receives order data, the order management apparatus 3 instructs the same or different slip printer 4 to print a cooking slip and an order slip corresponding to the order data. The slip printer 4 prints the cooking slip and the order slip according to the instruction. A cook cooks the commodities according to the cooking slip. A store clerk in charge of customer service passes the order slip to the customer. The store clerk in charge of customer service serves the cooked commodities to a customer table. The customer finishing eating and drinking of the commodities presents the order slip to the store clerk and requests accounting. The POS terminal 5 acquires, according to operation by the store clerk, from the order management apparatus 3, the order list concerning the customer who requests the accounting. The POS terminal 5 calculates, based on the acquired order list, a price concerning the provided commodities and settles the price.

As the order screen displayed in the table terminal 1, a plurality of order screens on which articles that can be ordered are different from one another are prepared. That is, a large number of articles that can be ordered are divided into several groups and the order screen is prepared for each of the groups. As a screen displayed in the table terminal 1, at least one selection screen for selecting the order screen is prepared separately from the order screen. For example, concerning beverages, four groups of "soft drink", "Japanese sake", "shochu", and "other liquors" are set. Four order screens respectively corresponding to these groups are prepared. For example, the order screen corresponding to "soft drink" is a screen for ordering at least one article belonging to "soft drink" such as "orange juice". As the selection screen, for example, a selection screen including the four groups of "soft drink", "Japanese sake", "shochu", and "other liquors" respectively as choices is prepared. As a selection screen higher in order than this selection screen, a selection screen including, as choices, higher order groups decided to include "soft drink", "Japanese sake", "shochu", and "other liquors" is prepared. As the selection screen, a still-higher order selection screen is sometimes prepared. One highest-order selection screen is called top screen as well. If the table terminal 1 receives an order of one article, first, the processor 11 causes the touch panel 14 to display the selection screen, which is the top screen. If a choice in the selection screen is selected by operation by the customer and a selection screen lower in order than the displayed selection screen is prepared, the processor 11 updates a display screen of the touch panel 14 to a selection screen corresponding to the selected choice. If a choice in the selection screen is selected by operation by the customer and the displayed selection screen is the lowest in order, the processor 11 updates the display screen of the touch panel 14 to an order screen corresponding to the selected choice.

In this way, for example, if the customer orders "orange juice", for example, the customer performs, on the touch panel 14, operation for selecting "grand menu" on a first-order selection screen, selecting "drink" on a second-order selection screen, selecting "soft drink" on a third-order selection screen, and selecting "orange juice" on the order screen.

That is, in this case, only after respectively performing the operation on the three selection screens, the customer can see display about an article that the customer is about to order. Therefore, in an unfamiliar case, the customer sometimes does not understand how the customer should operate the selection screens to successfully order a desired article. In this case, the customer sometimes inquires the store clerk about the operation.

If the store clerk receives such an inquiry, the store clerk performs predetermined operation with the handy terminal 2 carried by the store clerk to start an operation mode for operation guidance. In response to the operation, in the handy terminal 2, the processor 21 executes information processing explained below for the operation guidance.

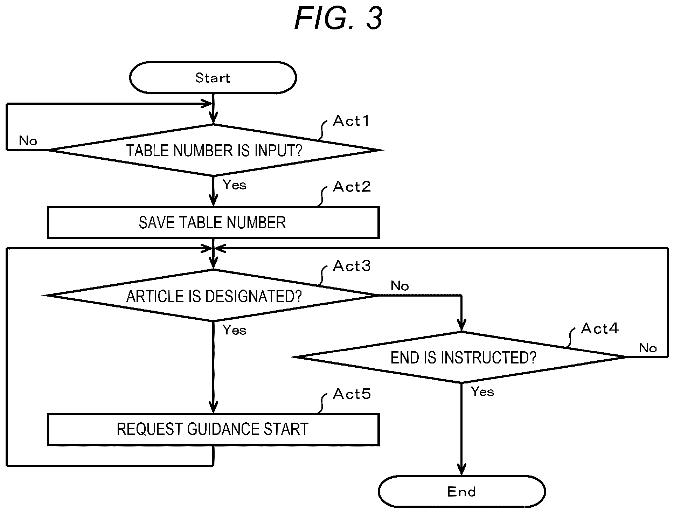

FIG. 3 is a flowchart illustrating a processing procedure of the processor 21 in the information processing for the operation guidance. The processor 21 executes the information processing according to an information processing program stored in the memory unit 22 or the auxiliary storage unit 23.

In Act 1, the processor 21 waits for a table number to be input. Therefore, the store clerk inputs, with predetermined operation in the touch panel 24 or the key switch group 25, a table number decided in order to identify a table used by the inquiring customer. If the table number is input in this way, the processor 21 determines Yes in Act 1 and proceeds to Act 2.

In Act 2, the processor 21 saves the table number input as explained above in the memory unit 22 or the auxiliary storage unit 23.

In Act 3, the processor 21 confirms whether an article is designated. If an article is not designated, the processor 21 determines No and proceeds to Act 4.

In Act 4, the processor 21 confirms whether an end instruction is performed. If the end instruction is not performed, the processor 21 determines No and returns to Act 3.

In this way, in Act 3 and Act 4, the processor 21 waits for an article to be designated or an end to be instructed.

The store clerk designates, with predetermined operation in the touch panel 24 or the key switch group 25, an article set as an inquiry target. Operation for the designation of an article is desirably the same operation as operation for placing an order using the handy terminal 2. If an article is designated in this way, the processor 21 determines Yes in Act 3 and proceeds to Act 5.

In Act 5, the processor 21 requests the table terminal 1, which is set in a table identified by the table number saved in Act 2, to start guidance. Specifically, the processor 21 transmits, with a destination set to a terminal code associated in advance with the table number saved in Act 2, request data including a command for instructing a start of guidance operation and an article code for identifying the designated article. The processor 21 obtains the terminal code associated in advance with the table number by referring to an association table prepared in advance as a table representing association between table numbers and terminal codes. The association table may be stored in the memory unit 22 or the auxiliary storage unit 23 or may be stored in the order management apparatus 3 or another apparatus such as a not-illustrated POS server.

In this way, the processor 11 notifies the designated article to the table terminal 1 functioning as the second terminal. Therefore, the processor 11 executes the information processing based on the information processing program, whereby the computer including the processor 11 as the central part functions as a notifying section that performs the notification explained above.

The wireless router 6 transmits, directly or via the communication network 7 and another wireless router 6, the request data transmitted from the handy terminal 2 to the table terminal 1 identified by the terminal code set as the destination.

If the request data transmitted to the table terminal 1 in this way is received by the communication unit 15, in the table terminal 1, the processor 11 executes the information processing explained below for the operation guidance.

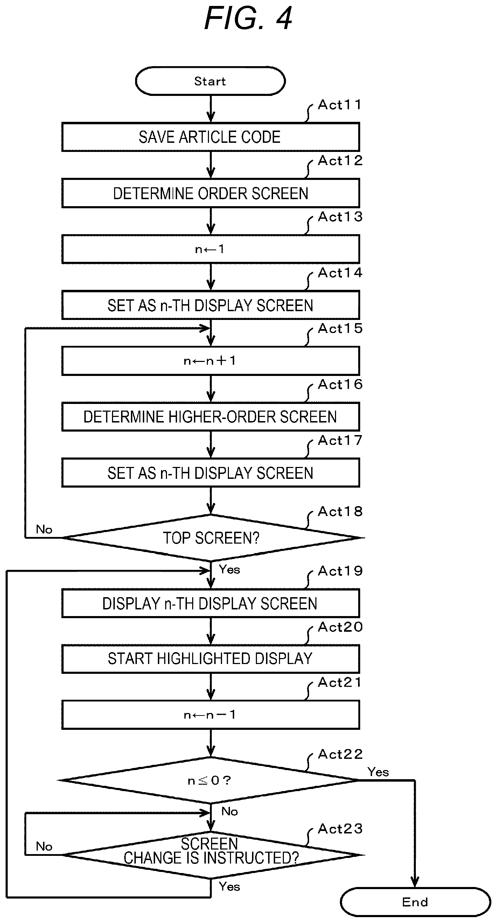

FIG. 4 is a flowchart illustrating a processing procedure of the processor 11 in the information processing for the operation guidance. The processor 11 executes the information processing according to an information processing program stored in the memory unit 12 or the auxiliary storage unit 13.

In Act 11, the processor 11 saves an article code included in received request data in the memory unit 12 or the auxiliary storage unit 13.

In Act 12, the processor 11 determines an order screen for ordering an article identified by the saved article code. If the article code represents "orange juice" in the specific example explained above, the processor 11 determines an order screen for ordering the "orange juice".

That is, the processor 21 determines the article identified by the article code included in the request data as an article designated by the store clerk. The processor 21 executes the information processing based on the information processing program in this way, whereby the computer including the processor 21 as the central part functions as a determining section that performs such determination.

In Act 13, the processor 11 sets 1 in a variable n. The variable n is a variable for counting the number of display screens ranging from the top screen to the order screen.

In Act 14, the processor 11 sets the order screen determined in Act 12 as an n-th display screen, that is, a first display screen.

In Act 15, the processor 11 increases the variable n by one.

In Act 16, the processor 11 determines a selection screen that is one order higher the order screen. If the article code is "orange juice" in the specific example explained above, the processor 11 determines a selection screen including four groups of "soft drink", "Japanese sake", "shochu", and "other liquors" respectively as choices.

In Act 17, the processor 11 sets the selection screen determined in Act 16 as the n-th display screen. That is, the processor 11 sets, as a second display screen, the selection screen including the four groups of "soft drink", "Japanese sake", "shochu", and "other liquors" respectively as the choices.

In Act 18, the processor 11 confirms whether the selection screen determined in Act 16 is the top screen. If the selection screen is not the top screen, the processor 11 determines No and repeats the processing in Act 15 and subsequent acts. Consequently, the processor 11 sequentially sets higher-order selection screens as the n-th display screen. That is, in the specific example explained above, the processor 11 sets, as a third display screen, a selection screen including "drink" as a choice and sets, as a fourth display screen, a selection screen including "grand menu" as a choice. If a selection screen determined last in Act 16 is the top screen, the processor 11 determines Yes in Act 18 and proceeds to Act 19.

In Act 19, the processor 11 causes the touch panel 14 to display the n-th display screen. After executing Act 17 last, since the variable n is not changed, first, the processor 11 displays the top screen.

In Act 20, the processor 11 starts highlighted display. The highlighted display is display for highlighting, compared with the other choices, a choice that should be selected to transition to an n-1-th display screen among displayed screens. As the highlighted display, the processor 11 performs flashing, a change of a display color, a change of a line type of a frame line, a change in thickness of the frame line, a change of a character font, a change of a character size, and the like alone or in combination. However, the highlighted display may be any display if the purpose explained above is achieved.

In Act 21, the processor 11 reduces the variable n by 1.

In Act 22, the processor 11 confirms whether a value of the variable n is 0 or less. If the displayed screen is the selection screen, the variable n is 1 or more. Therefore, in this case, the processor 11 determines No and proceeds to Act 23.

In Act 23, the processor 11 waits for a screen change instruction to be performed. If operation for selecting the highlighted choice is performed in the touch panel 14 or the like, the processor 11 regards the operation as the change instruction, determines Yes, and returns to Act 19. That is, if the change instruction is performed and the value of the variable n is 2 or more, the processor 11 updates the display screen of the touch panel 14 to a selection screen that is one order lower than the display screen displayed to that point. If the variable n is 1, the processor 11 updates the display screen of the touch panel 14 to the order screen. If the first display screen, that is, the order screen is displayed, the processor 11 reduces the variable n to 0 through Act 21. Therefore, the processor 11 determines Yes in Act 22. In this case, the processor 11 ends the information processing illustrated in FIG. 4 and returns to a normal operation state for receiving an order.

In this way, the customer can order a desired article, for example, "orange juice" on the displayed order screen. That is, the customer can perform, according to the display, operation until the customer orders the desired article from the top screen. The operation is guided to the customer.

The processor 21 executes the information processing based on the information processing program in this way, whereby the computer including the processor 21 as the central part functions as a guiding section that performs a guiding operation.

If the customer continuously inquires about another article, the store clerk designates a new article, whereby the processor 21 repeats Act 5 in FIG. 3. In response to the repetition of Act 5, the table terminal 1 repeats the guiding operation explained above concerning the article designated anew. If the customer ends the inquiry, the store clerk performs predetermined operation with the handy terminal 2 carried by the store clerk to instruct an end. Then, the processor 21 determines Yes in Act 4 and ends the information processing illustrated in FIG. 3.

As explained above, with the POS system 100, the order screen for designating, as an order article, in the table terminal 1, an article that the customer is about to order is displayed. A choice that should be selected in order to order the article is highlighted on the order screen. In this way, it is possible to guide the customer, who is the operator of the table terminal 1, about which choice should be selected on which order screen. Designation of such an article set as a target of the guide can be performed by operation by the store clerk in the handy terminal 2. In principle, the table terminal 1 is operated by the customer. Therefore, it could occur that the store clerk is not familiar with the operation of the table terminal 1. However, the handy terminal 2 is regularly operated by the store clerk. Therefore, the store clerk can relatively easily perform designation of an article using the handy terminal 2. In this way, work of the store clerk for guidance to the customer is easy. A burden of the store clerk for the work is small.

With the POS system 100, if the order screen is displayed as explained above, the selection screens displayed in the table terminal 1 in displaying the order screen are displayed in display order from the top screen. Therefore, it is possible to guide the customer about on which selection screen operation should be performed in order to display the order screen.

With the POS system 100, a choice that should be selected on each of the selection screens displayed as explained above is highlighted. Therefore, it is also possible to guide the customer about what kind of operation should be performed on the selection screens in order to display the order screen.

With the POS system 100, a change of the display of the selection screen and the order screen is performed according to operation by the operator in the table terminal 1. Therefore, the customer can perform the change of the display of the selection screen and the order screen in a desired pace of the customer.

With the POS system 100, operation for instructing a change of the display of the selection screen and the order screen is operation for selecting a choice for transitioning the display from the selection screen to the order screen or operation for selecting a choice for transitioning the display to a lower-order selection screen that should be passed in order to transition to the order screen. Therefore, it is possible to cause the customer to perform operation that the customer should perform until the order screen is displayed from a state in which the top screen is displayed. Consequently, it is possible to cause the customer to simulate the operation. It is possible to improve the effect of the guidance.

Various modifications explained below of this embodiment are possible, some of which fall outside the scope of the present invention as claimed, as indicated below.

In the handy terminal 2, the operation mode for operation guidance may be automatically released after a request for a guidance start for one article is ended. That is, for example, the processor 21 may end the information processing illustrated in FIG. 3 after ending the request for the guidance start in Act 5 in FIG. 3.

According to an embodiment not covered by the appended claims, in the table terminal 1, the order screen for ordering a designated article may be suddenly displayed according to a request from the handy terminal 2. That is, for example, the processor 11 may end, without performing Act 13 to Act 23 in FIG. 4, the information processing illustrated in FIG. 4 after causing the touch panel 14 to display the order screen determined in Act 12. In this way as well, it is possible to guide the customer, who is the operator of the table terminal 1, about which choice should be selected on which order screen.

According to an embodiment not covered by the appended claims, in the table terminal 1, the display screen may be changed to the order screen without waiting for operation by the customer. That is, for example, in Act 23 in FIG. 4, the processor 11 may determine Yes every time an elapsed time from the display of the display screen in Act 19 reaches a predetermined time. In this way, it is possible to save labor and time for the customer to perform operation for instructing a screen change.

According to an embodiment not covered by the appended claims, in the table terminal 1, the display screen may be changed according to operation different from the operation for selecting a choice for transitioning the display to the selection screen or the order screen to which the display should be transitioned. That is, for example, a condition for the processor 11 to determine Yes in Act 23 may be changed as appropriate. For example, operation for touching any part of the screen of the touch panel 14 may be set as a change instruction. Alternatively, for example, a button such as "Next" may be displayed to be superimposed on the display screen. Operation for touching the button may be set as the change instruction. In this way, the operation can be more easily understood by a customer unfamiliar with the operation.

In the table terminal 1, a screen for explaining a procedure of operation with characters may be displayed to be superimposed on or side by side with the selection screen and the order screen displayed to receive a normal order.

According to an embodiment not covered by the appended claims, in the table terminal 1, rather than displaying an actual selection screen and an actual order screen, a moving image or an animation representing appearances of the selection screen and the order screen and representing flows of operation on the screens may be displayed.

In the handy terminal 2, an article designated in a state in which the operation mode for operation guide is set may be notified to the order management apparatus 3 as an ordered article.

In the table terminal 1, the article identified by the article code included in the request data received from the handy terminal 2 may be added to a list of order candidates.

According to an embodiment not covered by the appended claims, in the table terminal 1, as the operation for guidance, another operation such as reproduction of a voice message may be performed instead of or in addition to the display of the screen explained above.

The order system can also be realized as an order system not including a processing function of sales data or an order system including both of the processing function of sales data and a function different from the guiding function explained above.

A part or all of the functions realized by the processors 11 and 21 according to the information processing can also be realized by hardware that executes information processing not based on a computer program such as a logic circuit. Each of the functions explained above can also be realized by combining software control with the hardware such as the logic circuit.

## Claims

1. An order system, comprising:
a first terminal (2) operated by a store clerk; and
a second terminal (1) operated by a customer, wherein
the first terminal (2) comprises a first non-volatile memory and a first processor (21) configured to:
receive a table number input identifying a table used by the customer (Act 1);
save the table number input in the first non-volatile memory (Act 2);
receive an instruction for designating an article (Act 3);
transmit to the second terminal (1), a request to start guidance including an article code for identifying the designated article, wherein a terminal code of the second terminal set as the destination of the transmission is associated in advance with the saved table number (Act 5);
the second terminal (1) comprises a touch panel (14), a second non-volatile memory and a second processor (11) configured to:
receive the request to start guidance (Act 11);
save the article code included in the received request to start guidance in the second non-volatile memory (Act 11);
determine an order screen for ordering the designated article identified by the saved article code (Act 12);
set a variable n, for counting a number of display screens ranging from a top screen to the order screen, as 1 (Act 13);
set the order screen as an n-th display screen (Act 14);
increase the variable n by one (Act 15);
determine a selection screen that is one order higher than the order screen (Act 16);
set the determined selection screen as the n-th display screen (Act 17);
repeat the increasing of the variable n (Act 15), the determination of the selection screen (Act 16) and the setting of the determined selection screen (Act 17) if the selection screen differs from the top screen (Act 18);
if the selection screen is the top screen (Act 18), cause the display screen of the touch panel (14) to display the n-th screen (Act 19);
if the variable n is greater than one, start a highlighted display for highlighting a choice to be selected to transition to a display screen having a value preceding the value of the variable n (Act 20); else, start a highlighted display for highlighting a choice that should be selected in order to order the article on the order screen (Act 20);
reduce the variable n by one (Act 21);
while the value of the variable n is greater than zero (Act 22), repeat: waiting for a screen change instruction (Act 23), the screen change instruction being an operation for selecting the highlighted choice, the displaying of the n-th display screen (Act 19), the starting a highlighted display (Act 20), and the reducing of the variable n by one (Act 21); and
return to a normal operation state for receiving an order if the variable n is zero (Act 22).

2. The system according to claim 1, wherein the order system is a POS system.

3. The system according to claim 1 or 2, wherein the second terminal is a POS terminal.

4. The system according to any one of claims 1 to 3, further comprising: a plurality of second terminals.

5. An order terminal for use by a customer, comprising a touch panel (14), a second non-volatile memory and a second processor (11) configured to:
receive a request to start guidance including an article code for identifying a designated article (Act 11);
save the article code included in the received request to start guidance in the second non-volatile memory (Act 11);
determine an order screen for ordering the designated article identified by the saved article code (Act 12);
set a variable n, for counting a number of display screens ranging from a top screen to the order screen, as 1 (Act 13);
set the order screen as an n-th display screen (Act 14);
increase the variable n by one (Act 15);
determine a selection screen that is one order higher than the order screen (Act 16);
set the determined selection screen as the n-th display screen (Act 17);
repeat the increasing of the variable n (Act 15), the determination of the selection screen (Act 16) and the setting of the determined selection screen (Act 17) if the selection screen differs from the top screen (Act 18);
if the selection screen is the top screen (Act 18), cause the display screen of the touch panel (14) to display the n-th screen (Act 19);
if the variable n is greater than one, start a highlighted display for highlighting a choice to be selected to transition to a display screen having a value preceding the value of the variable n (Act 20); else, start a highlighted display for highlighting a choice that should be selected in order to order the article on the order screen (Act 20);
reduce the variable n by one (Act 21);
while the value of the variable n is greater or equal than zero (Act 22), repeat: waiting for a screen change instruction (Act 23), the screen change instruction being an operation for selecting the highlighted choice, the displaying of the n-th display screen (Act 19), the starting a highlighted display (Act 20), and the reducing of the variable n by one (Act 21); and
return to a normal operation state for receiving an order if the variable n is zero (Act 22).

6. The order terminal according to claim 5, wherein the order terminal is a POS terminal.

7. An information processing method comprising using the system of any one of claims 1 to 4.

8. A non-transitory computer readable medium storing a program causing an order terminal comprising a touch panel, the non-transitory computer readable medium and a processor, upon execution of the program by the processor, to be configured as the order terminal of claim 5.

## Patentansprüche

1. Bestellsystem, umfassend:
ein erstes Endgerät (2), das von einem Verkäufer bedient wird, und
ein zweites Endgerät (1), das von einem Kunden bedient wird, wobei
das erste Endgerät (2) einen ersten nichtflüchtigen Speicher und einen ersten Prozessor (21) umfasst, der zu Folgendem konfiguriert ist:
Empfangen einer Tischnummereingabe, die einen von dem Kunden verwendeten Tisch identifiziert (Handlung 1);
Speichern der eingegebenen Tischnummer in dem ersten nichtflüchtigen Speicher (Handlung 2);
Empfangen einer Anweisung zum Bezeichnen eines Artikels (Handlung 3);
Übertragen, an das zweite Endgerät (1), einer Aufforderung zum Starten einer Beratung, die einen Artikelcode zum Identifizieren des bezeichneten Artikels beinhaltet, wobei ein Endgerätecode des zweiten Endgeräts, der als das Ziel der Übertragung gesetzt ist, im Voraus mit der gespeicherten Tischnummer assoziiert wird (Handlung 5);
wobei das zweite Endgerät (1) ein Berührungsfeld (14), einen zweiten nichtflüchtigen Speicher und einen zweiten Prozessor (11) umfasst, der zu Folgendem konfiguriert ist:
Empfangen der Aufforderung zum Beginnen der Beratung (Handlung 11);
Speichern des Artikelcodes, der in der empfangenen Aufforderung zum Starten der Beratung beinhaltet ist, in dem zweiten nichtflüchtigen Speicher (Handlung 11);
Bestimmen einer Bestellmaske zum Bestellen des Artikels, der durch den gespeicherten Artikelcode identifiziert ist (Handlung 12);
Setzen einer Variablen n, zum Zählen einer Anzahl von Anzeigebildschirmen, die von einem obersten Bildschirm bis zu dem Bestellbildschirm reicht, auf 1 (Handlung 13);
Setzen des Bestellbildschirm auf einen n-ten Anzeigebildschirm (Handlung 14);
Erhöhen der Variablen n um eins (Handlung 15);
Bestimmen eines Auswahlbildschirms, der eine Ordnung höher ist als der Bestellbildschirm (Handlung 16);
Setzen des bestimmten Auswahlbildschirms als den n-ten Anzeigebildschirm (Handlung 17);
Wiederholen des Erhöhens der Variablen n (Handlung 15), die Bestimmung des Auswahlbildschirms (Handlung 16) und das Setzen des bestimmten Auswahlbildschirms (Handlung 17), wenn der Auswahlbildschirm von dem obersten Bildschirm abweicht (Handlung 18);
wenn der Auswahlbildschirm der oberste Bildschirm ist (Handlung 18), Veranlassen des Anzeigebildschirms des Berührungsfelds (14), den n-ten Bildschirm anzuzeigen (Handlung 19);
wenn die Variable n größer ist als eins, Starten einer hervorgehobene Anzeige zum Hervorheben einer auszuwählenden Wahl, um zu einem Anzeigebildschirm überzugehen, der einen Wert vor dem Wert der Variablen n aufweist (Handlung 20); andernfalls Starten einer hervorgehobenen Anzeige zum Hervorheben einer auszuwählenden Wahl, um den Artikel auf dem Bestellbildschirm zu bestellen (Handlung 20);
Reduzieren der Variablen n um eins (Handlung 21);
während der Wert der Variablen n größer ist als Null (Handlung 22), Wiederholen von Folgendem: Warten auf eine Bildschirmwechselanweisung (Handlung 23), wobei die Bildschirmwechselanweisung ein Vorgang zum Auswählen der hervorgehobenen Wahl ist, das Anzeigen des n-ten Anzeigebildschirms (Handlung 19), das Starten einer hervorgehobenen Anzeige (Handlung 20) und das Reduzieren der Variablen n um eins (Handlung 21); und
Zurückkehren in den normalen Betriebszustand, um eine Bestellung zu empfangen, wenn die Variable n gleich Null ist (Handlung 22).

2. System nach Anspruch 1, wobei das Bestellsystem ein POS-System ist.

3. System nach Anspruch 1 oder 2, wobei das zweite Endgerät ein POS-Endgerät ist.

4. System nach einem der Ansprüche 1 bis 3, ferner umfassend: eine Vielzahl von zweiten Endgeräten.

5. Bestellendgerät zur Verwendung durch einen Kunden, umfassend ein Berührungsfeld (14), einen zweiten nichtflüchtigen Speicher und einen zweiten Prozessor (11), der zu Folgendem konfiguriert ist:
Empfangen einer Aufforderung zum Starten einer Beratung, die einen Artikelcode zum Identifizieren eines bezeichneten Artikels beinhaltet (Handlung 11);
Speichern des Artikelcodes, der in der empfangenen Aufforderung zum Starten der Beratung beinhaltet ist, in dem zweiten nichtflüchtigen Speicher (Handlung 11);
Bestimmen einer Bestellmaske zum Bestellen des Artikels, der durch den gespeicherten Artikelcode identifiziert ist (Handlung 12);
Setzen einer Variablen n, zum Zählen einer Anzahl von Anzeigebildschirmen, die von einem obersten Bildschirm bis zu dem Bestellbildschirm reicht, auf 1 (Handlung 13);
Setzen des Bestellbildschirm auf einen n-ten Anzeigebildschirm (Handlung 14);
Erhöhen der Variablen n um eins (Handlung 15);
Bestimmen eines Auswahlbildschirms, der eine Ordnung höher ist als der Bestellbildschirm (Handlung 16);
Setzen des bestimmten Auswahlbildschirms als den n-ten Anzeigebildschirm (Handlung 17);
Wiederholen des Erhöhens der Variablen n (Handlung 15), die Bestimmung des Auswahlbildschirms (Handlung 16) und das Setzen des bestimmten Auswahlbildschirms (Handlung 17), wenn der Auswahlbildschirm von dem obersten Bildschirm abweicht (Handlung 18);
wenn der Auswahlbildschirm der oberste Bildschirm ist (Handlung 18), Veranlassen des Anzeigebildschirms des Berührungsfelds (14), den n-ten Bildschirm anzuzeigen (Handlung 19);
wenn die Variable n größer ist als eins, Starten einer hervorgehobene Anzeige zum Hervorheben einer auszuwählenden Wahl, um zu einem Anzeigebildschirm überzugehen, der einen Wert vor dem Wert der Variablen n aufweist (Handlung 20); andernfalls Starten einer hervorgehobenen Anzeige zum Hervorheben einer auszuwählenden Wahl, um den Artikel auf dem Bestellbildschirm zu bestellen (Handlung 20);
Reduzieren der Variablen n um eins (Handlung 21);
während der Wert der Variablen n größer als oder gleich wie Null ist (Handlung 22), Wiederholen von Folgendem: Warten auf eine Bildschirmwechselanweisung (Handlung 23), wobei die Bildschirmwechselanweisung ein Vorgang zum Auswählen der hervorgehobenen Wahl ist, das Anzeigen des n-ten Anzeigebildschirms (Handlung 19), das Starten einer hervorgehobenen Anzeige (Handlung 20) und das Reduzieren der Variablen n um eins (Handlung 21); und
Zurückkehren in den normalen Betriebszustand, um eine Bestellung zu empfangen, wenn die Variable n gleich Null ist (Handlung 22).

6. Bestellendgerät nach Anspruch 5, wobei das Bestellendgerät ein POS-Endgerät ist.

7. Informationsverarbeitungsverfahren, umfassend ein Verwenden des Systems nach einem der Ansprüche 1 bis 4.

8. Nicht-transitorisches computerlesbares Medium, das ein Programm speichert, das bewirkt, dass ein Bestellendgerät, umfassend ein Berührungsfeld, das nicht-transitorische computerlesbare Medium und einen Prozessor, bei Ausführung des Programms durch den Prozessor als das Bestellendgerät nach Anspruch 5 konfiguriert wird.

## Revendications

1. Système de commande, comprenant :
une première borne (2) exploitée par un employé de magasin ; et
une deuxième borne (1) exploitée par un client, dans lesquelles
la première borne (2) comprend une première mémoire non volatile et un premier processeur (21) configurés de manière à :
recevoir une entrée de numéro de table identifiant une table utilisée par le client (action 1) ;
enregistrer l'entrée de numéro de table dans la première mémoire non volatile (action 2) ;
recevoir une instruction visant à désigner un article (action 3) ;
transmettre, à la deuxième borne (1), une demande de démarrage de guidage incluant un code d'article permettant d'identifier l'article désigné, dans lequel un code de borne de la deuxième borne définie en tant que la destination de la transmission est associé à l'avance au numéro de table enregistré (action 5) ;
la deuxième borne (1) comprend un panneau tactile (14), une deuxième mémoire non volatile et un deuxième processeur (11) configurés de manière à :
recevoir la demande de démarrage de guidage (action 11) ;
enregistrer le code d'article, inclus dans la demande de démarrage de guidage reçue, dans la deuxième mémoire non volatile (action 11) ;
déterminer un écran de commande pour commander l'article désigné identifié par le code d'article enregistré (action 12) ;
définir une variable « n », pour compter un nombre d'écrans d'affichage allant d'un écran supérieur à l'écran de commande, sur 1 (action 13) ;
définir l'écran de commande en tant qu'un n-ième écran d'affichage (action 14) ;
augmenter la variable « n » d'une unité (action 15) ;
déterminer un écran de sélection qui se situe un ordre plus haut que l'écran de commande (action 16) ;
définir l'écran de sélection déterminé en tant que le n-ième écran d'affichage (action 17) ;
répéter l'étape d'augmentation de la variable « n » (action 15), l'étape de détermination de l'écran de sélection (action 16) et l'étape de définition de l'écran de sélection déterminé (action 17), si l'écran de sélection diffère de l'écran supérieur (action 18) ;
si l'écran de sélection est l'écran supérieur (action 18), amener l'écran d'affichage du panneau tactile (14) à afficher le n-ième écran (action 19) ;
si la variable « n » est supérieure à 1, démarrer un affichage mis en surbrillance pour mettre en surbrillance un choix devant être sélectionné pour passer à un écran d'affichage dont la valeur précède la valeur de la variable « n » (action 20) ; sinon, démarrer un affichage mis en surbrillance pour mettre en surbrillance un choix qui devrait être sélectionné afin de commander l'article sur l'écran de commande (action 20) ;
diminuer la variable « n » d'une unité (action 21) ;
tandis que la valeur de la variable « n » est supérieure à zéro (action 22), répéter ce qui suit : attendre une instruction de changement d'écran (action 23), l'instruction de changement d'écran étant une opération destinée à sélectionner le choix mis en surbrillance, puis l'étape d'affichage du n-ième écran d'affichage (action 19), l'étape de démarrage de l'affichage mis en surbrillance (action 20) et l'étape de réduction de la variable « n » d'une unité (action 21) ; et
revenir à un état d'opération normal en vue de recevoir une commande si la variable « n » est égale à zéro (action 22).

2. Système selon la revendication 1, dans lequel le système de commande est un système de point de vente, POS.

3. Système selon la revendication 1 ou 2, dans lequel la deuxième borne est une borne POS.

4. Système selon l'une quelconque des revendications 1 à 3, comprenant en outre : une pluralité de deuxièmes bornes.

5. Borne de commande destinée à être utilisée par un client, comprenant un panneau tactile (14), une deuxième mémoire non volatile et un deuxième processeur (11), configurés de manière à :
recevoir une demande de démarrage de guidage comprenant un code d'article permettant d'identifier un article désigné (action 11) ;
enregistrer le code d'article, inclus dans la demande de démarrage de guidage reçue, dans la deuxième mémoire non volatile (action 11) ;
déterminer un écran de commande pour commander l'article désigné identifié par le code d'article enregistré (action 12) ;
définir une variable « n », pour compter un nombre d'écrans d'affichage allant d'un écran supérieur à l'écran de commande, sur 1 (action 13) ;
définir l'écran de commande en tant qu'un n-ième écran d'affichage (action 14) ;
augmenter la variable « n » d'une unité (action 15) ;
déterminer un écran de sélection qui se situe un ordre plus haut que l'écran de commande (action 16) ;
définir l'écran de sélection déterminé en tant que le n-ième écran d'affichage (action 17) ;
répéter l'étape d'augmentation de la variable « n » (action 15), l'étape de détermination de l'écran de sélection (action 16) et l'étape de définition de l'écran de sélection déterminé (action 17), si l'écran de sélection diffère de l'écran supérieur (action 18) ;
si l'écran de sélection est l'écran supérieur (action 18), amener l'écran d'affichage du panneau tactile (14) à afficher le n-ième écran (action 19) ;
si la variable « n » est supérieure à 1, démarrer un affichage mis en surbrillance pour mettre en surbrillance un choix devant être sélectionné pour passer à un écran d'affichage dont la valeur précède la valeur de la variable « n » (action 20) ; sinon, démarrer un affichage mis en surbrillance pour mettre en surbrillance un choix qui devrait être sélectionné afin de commander l'article sur l'écran de commande (action 20) ;
diminuer la variable « n » d'une unité (action 21) ;
tandis que la valeur de la variable « n » est supérieure ou égale à zéro (action 22), répéter ce qui suit : attendre une instruction de changement d'écran (action 23), l'instruction de changement d'écran étant une opération destinée à sélectionner le choix mis en surbrillance, puis l'étape d'affichage du n-ième écran d'affichage (action 19), l'étape de démarrage de l'affichage mis en surbrillance (action 20) et l'étape de réduction de la variable « n » d'une unité (action 21) ; et
revenir à un état d'opération normal en vue de recevoir une commande si la variable « n » est égale à zéro (action 22).

6. Borne de commande selon la revendication 5, dans laquelle la borne de commande est une borne de point de vente, POS.

7. Procédé de traitement d'informations comprenant l'utilisation du système selon l'une quelconque des revendications 1 à 4.

8. Support non transitoire lisible par ordinateur stockant un programme amenant une borne de commande comprenant un panneau tactile, le support non transitoire lisible par ordinateur et un processeur, suite à l'exécution du programme par le processeur, à être configurée comme la borne de commande selon la revendication 5.
